# EUROPÄISCHE PATENTSCHRIFT

(11) **EP 2 100 353 B1**
(45) Veröffentlichungstag und Bekanntmachung des Hinweises auf die Patenterteilung: **04.06.2014**
(21) Anmeldenummer: 07846931.9
(22) Anmeldetag: 30.11.2007
(51) Int. Cl.: H02B 1/32

(54) **SCHALTSCHRANKANORDNUNG**
CONTROL BOX ARRANGEMENT
DISPOSITIF D'ARMOIRE DE COMMANDE

(30) Priorität: 12.12.2006 DE 102006058781
(43) Veröffentlichungstag der Anmeldung: 16.09.2009
(73) Patentinhaber: RITTAL GmbH & Co. KG, 35745 Herborn (DE)
(72) Erfinder: SCHELL, Michael, 35687 Dillenburg (DE); BECKER, Tobias, 35398 Lützellinden (DE)
(74) Vertreter: Tönhardt, Marion
(86) Internationale Anmeldenummer: PCT/EP2007/010441
(87) Internationale Veröffentlichungsnummer: WO 2008/071314

(56) Entgegenhaltungen:
- EP-A- 0 146 071
- DE-A1- 19 530 016
- US-A- 5 052 565

## Beschreibung

Die Erfindung bezieht sich auf eine Schaltschrankanordnung mit mindestens einem Schaltschrank, der ein aus vertikalen und horizontalen Rahmenschenkeln aufgebautes Rahmengestell aufweist und in seinem Inneren mit Montageteilen einschließlich Montageschienen ausgerüstet oder ausrüstbar ist zur variablen Gestaltung der Innenraumaufteilung, wobei die Rahmenschenkel mit Befestigungslochreihen in bestimmtem Raster versehen sind. Weiterhin sind zum Anbinden der Montageschienen an den Rahmenschenkeln einstückige Anschlussstücke vorgesehen sind, die einen in ihrem angebrachten Zustand rechtwinklig von der Anbindungsebene des zugeordneten Rahmenschenkels abstehenden Koppelabschnitt aufweisen, welcher quadratischen oder rechteckförmigen Querschnitt und mindestens eine darin eingebrachte, quer verlaufende Gewindebohrung besitzt, wobei die vier Ebenen des Koppelabschnittes parallel zur vertikalen und horizontalen Ebene des Schaltschranks liegen. Jedes Anschlussstück weist zum Anbinden an dem betreffenden Rahmenschenkel einen Verbindungsabschnitt mit einer parallel zu der Anbindungsebene des Rahmenschenkels verlaufenden Verbindungsebene auf, an der eine in ein Befestigungsloch des Rahmenschenkels einhängbare hakenartige Haltenase vorsteht. Eine solche Schaltschrankanordnung ist aus der US 5 052 565 A1 bekannt.

Eine ähnliche Anordnung, allerdings ohne Haltenasen, ist in der EP 0 146 071 A beschrieben.

Die DE 40 13 379 C1 zeigt eine Schaltschrankanordnung mit einem Schaltschrank,bei dem der Innenraum in mehrere horizontal übereinander angeordnete Teilräume in verschiedener Weise aufteilbar ist, wobei in die Tiefenrichtung verlaufende Montageschienen an den vertikalen Rahmenschenkeln angebunden sind.

Eine weitere Schaltschrankanordnung mit einem Schaltschrank, dessen Innenraum in mehrere Teilräume unterteilt ist, ist in der DE 10 2004 054 173 Al angegeben. Bei diesem bekannten Schaltschrank ist ein von vorne zum Einbau von elektrischen Geräten zugänglicher Geräteraum mittels vertikaler Trennwände von einem seitlich daneben angeordneten Kabelanschlussraum und einem dahinter im rückwärtigen Bereich des Schaltschrankinnenraums angeordneten Sammelschienenraum getrennt. Über ein Tragegerüst für die Trennwände sind keine näheren Ausführungen gemacht.

Der Erfindung liegt die Aufgabe zugrunde, eine Schaltschrankanordnung der eingangs genannten Art bereitzustellen, die mit möglichst wenig Montageaufwand unterschiedliche Innenraumgestaltungen ermöglicht.

Diese Aufgabe wird mit den Merkmalen des Anspruches 1 gelöst. Vorteilhafte Ausgestaltungen sind Gegenstand der Unteransprüche.

Erfindungsgemäß ist vorgesehen, dass zum Verbinden horizontal und vertikal angeordneter Montageschienen Eckverbinder, Kreuzverbinder und/oder T-Stücke mit im Querschnitt quadratischen oder rechteckfiörmigen Verbindungsabschnitten vorgesehen sind, die in ihrer Querschnittsabmessung an die Breite der Profilschenkel der Montageschienen angepasst sind und in Anpassung an den Rasterabstand der Befestigungslochreihen in ihren Auflageflächen mit quer verlaufenden Gewindelöchern versehen sind. Mit räumlichen Winkeln bzw. räumlich gekreuzten Verbindern werden dabei Anbindungen in allen drei Raumrichtungen ermöglicht.

Mit diesen Maßnahmen wird eine variable Gestaltung des Schaltschrankinnenraumes bei einfachem, stabilem Aufbau ermöglicht.

Die Montagemaßnahmen werden dabei dadurch begünstigt, dass in jeder Ebene des Koppelabschnittes mindestens eine Gewindebohrung eingebracht ist, deren Abstand zu der Anbindungsebene des zugeordneten Rahmenschenkels einem ganzzahligen Vielfachen des Rasterabstandes entspricht.

Zu einer einfachen, stabilen Fixierung tragen die Maßnahmen bei, dass in dem Verbindungsabschnitt des Anschlussstückes eine Durchgangsbohrung zum Durchführen einer Befestigungsschraube eingebracht ist.

Für eine erhöhte Stabilität und die Möglichkeit einer Montage in unterschiedlichen Raumrichtungen ist des Weiteren vorteilhaft vorgesehen, dass die Montageschiene mehrere im Querschnitt rechtwinklig zueinander stehende Profilschenkel aufweist, deren Breite an den Querschnitt des Koppelabschnittes des Anschlussstückes angepasst ist.

Vorteilhafte Ausgestaltungen bestehen darin, dass die Montageschiene im Querschnitt rechtwinklig mit zwei Schenkeln, U-förmig, C-förmig oder als geschlossenes Hohlprofil ausgebildet und an den Querschnitt des Koppelabschnittes angepasst ist und dass die Montageschiene in allen Profilschenkeln mit gleichen Befestigungslochreihen wie die Rahmenschenkel versehen ist.

Eine eindeutige, stabile Verbindung wird auch dadurch begünstigt, dass der Koppelabschnitt allseitig über einen Absatz in den angrenzenden, erweiterten Abschnitt des Anschlussstückes übergeht, wobei die Höhe des Absatzes in etwa der Wandstärke der Montageschiene entspricht.

Vorteilhafte Montagemöglichkeiten werden des Weiteren dadurch geboten, dass die Befestigungslochreihen abwechselnd runde und in Längsrichtung der Rahmenschenkel oder Montageschienen schlitzförmige Löcher aufweisen.

Weitere vorteilhafte Montagemöglichkeiten ergeben sich auch dadurch, dass die Rahmenschenkel in Breitenrichtung und/oder in Tiefenrichtung voneinander abgesetzte Montageebenen aufweisen und dass Anschlussstücke für die Anbindung in beiden Montageebenen vorgesehen sind.

Eine z. B. für Niederspannungsanlagen günstige Raumaufteilung wird dadurch erhalten, dass vertikale Montageschienen an Rahmenschenkeln und/oder horizontalen Montageschienen in Tiefenrichtung im Inneren der Schaltschrankanordnung versetzt angebunden sind und dass in Tiefenrichtung vor den vertikalen Montageschienen übereinander angeordnete und mittels horizontaler Raumteilerböden voneinander getrennte Funktionsräume gebildet sind, die auf ihrer Rückseite mit an den vertikalen Montageschienen angebrachten Montageplatten abgeschlossen sind, auf deren Innenseite vertikal durch mehrere Funktionsräume verlaufende Verteilschienen zur Stromversorgung von in den Funktionsräumen aufgenommenen Gerätekomponenten montiert sind.

Die Erfindung wird nachfolgend anhand von Ausführungsbeispielen unter Bezugnahme auf die Zeichnungen näher erläutert. Es zeigen:
- Fig. 1: eine Schaltschrankanordnung mit abgenommenen Türen und teilweise abgenommenen Wandelementen mit mehreren Funktionsräumen in perspektivischer Ansicht,
- Fig. 2A und 2B: eine Schaltschrankanordnung mit einem Schaltschrank mit mehreren durch vertikale Trennwände gebildeten Teilräumen in Draufsicht und mit mehreren horizontal abgetrennten Teilräumen in Frontansicht mit Teiltüren,
- Fig. 3: eine gläserne Darstellung eines Schaltschrankes mit horizontal getrennten Teilräumen, einem Verteilschienensystem und daran angeschlossenen Gerätekomponenten in perspektivischer Ansicht,
- Fig. 4: die Ausführung nach Fig. 3 in Frontansicht,
- Fig. 5: die Ausführung nach Fig. 3 in Draufsicht,
- Fig. 6: einen Ausschnitt eines Schaltschrankes mit mehreren horizontal voneinander getrennten Funktionsräumen in perspektivischer Vorderansicht mit Verteilschienensystem,
- Fig. 7: einen Ausschnitt eines Schaltschrankes in einem Eckbereich eines Teilraumes in Form eines Funktionsraumes in perspektivischer Ansicht,
- Fig. 8: einen Seitenwandbereich eines Schaltschrankes von innen mit seitlichen Wandabschnitten,
- Fig. 9: einen Seitenwandbereich eines Schaltschrankes mit einem gelösten Seitenwandabschnitt in perspektivischer Ansicht,
- Fig. 10: zwei unterschiedlich hohe Seitenwandabschnitte in perspektivischer Ansicht und einen vergrößerten Ausschnitt eines Seitenwandabschnittes in dessen Eckbereich,
- Fig. 11: eine Teil-Montageplatte in perspektivischer Ansicht,
- Fig. 12: eine Teiltür in perspektivischer Ansicht,
- Fig. 13: einen Montagewinkel in perspektivischer Ansicht,
- Fig. 14: einen Raumteilerboden in perspektivischer Ansicht,
- Fig. 15: einen Abschnitt eines Trennstegs in perspektivischer Ansicht,
- Fig. 16: ausschnittsweise einen Aufbau für eine Sammelschienenanordnung einer Hauptschienenanordnung und/oder einer Verteilschienenanordnung in perspektivischer Ansicht,
- Fig. 17: einen Sammelschienenträger und eine Sammelschienenabdeckung ausschnittsweise in auseinander gezogener perspektivischer Ansicht,
- Fig. 18: eine Stützblende für eine Sammelschienenanordnung nach Fig. 16,
- Fig. 19: einen Einzelträger einer Sammelschiene mit Einzelabdeckung,
- Fig. 20: einen horizontalen Querschnitt einer Schaltschrankanordnung in der Ebene eines Funktionsraumes,
- Fig. 21: einen Ausschnitt von an Rahmenschenkel der Schaltschrankanordnung angebundenen Montageschienen in perspektivischer Ansicht,
- Fig. 22: zwei in verschiedenen Montageebenen von Rahmenschenkeln der Schaltschrankanordnung angebundene Montageschienen,
- Fig. 23: einen Eckverbinder für Montageschienen in perspektivischer Ansicht,
- Fig. 24 und Fig. 25: zwei verschiedene Ausführungsbeispiele von Anschlussstücken für die Anbindung von Montageschienen an Rahmenschenkeln der Schaltschrankanordnung in perspektivischer Darstellung und
- Fig. 26: eine Montageschiene in Gesamtdarstellung und in einer vergrößerten ausschnittsweisen Darstellung in perspektivischer Ansicht.

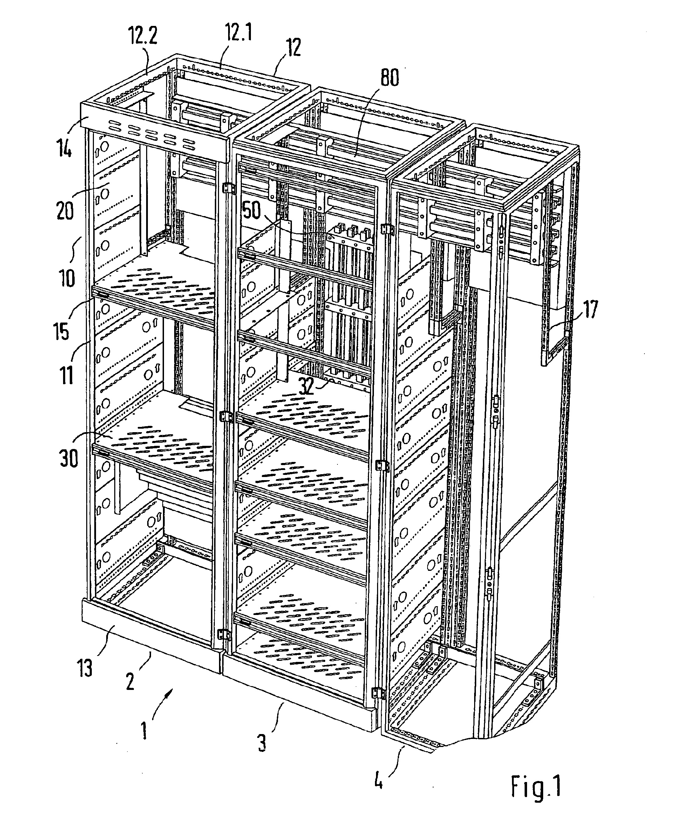

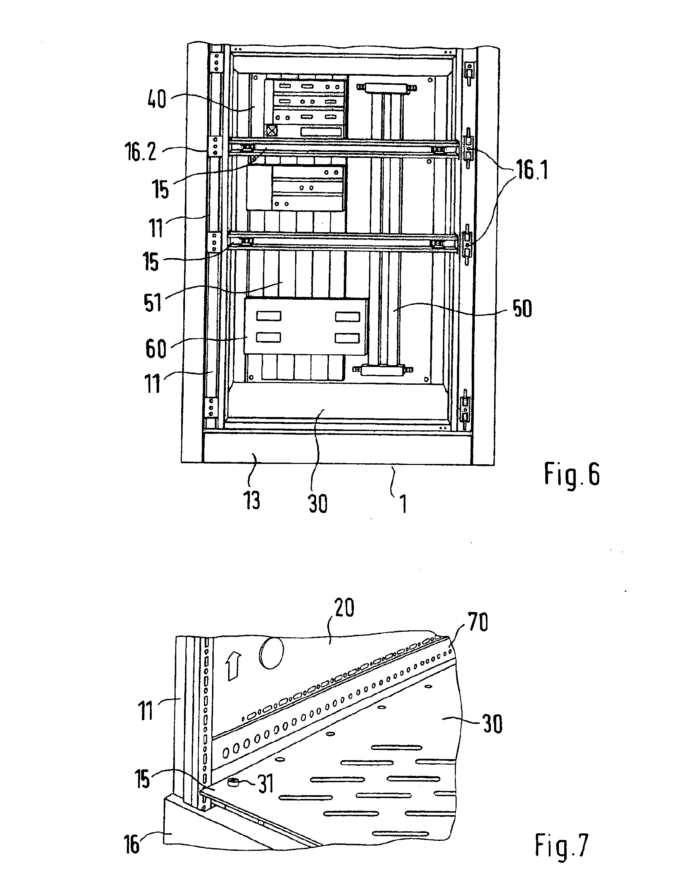

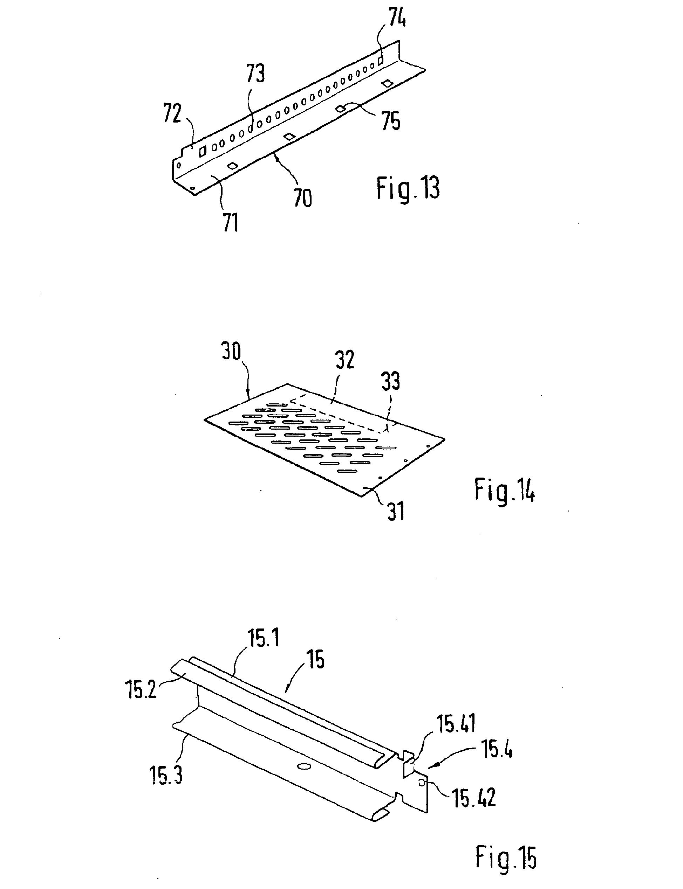

Fig. 1 zeigt eine Schaltschrankanordnung 1 mit mehreren mit ihren jeweiligen Rahmengestellen seitlich aneinander gereihten Schaltschränken 2, 3, 4, wobei der rechte Schaltschrank eine gegenüber den beiden anderen Schaltschränken 2, 3 geringere Breite besitzt und lediglich einen von unten bis oben durchgehenden Innenraum aufweist, während die beiden anderen Schaltschränke 2, 3 mehrere horizontal übereinander liegende Teilräume 5 in Form von Funktionsräumen unterschiedlicher Höhe aufweisen. Im rückwärtigen Bereich der Schaltschrankanordnung 1 ist ein Hauptschienensystem mit mehreren horizontal verlaufenden Stromschienen angeordnet, während in dem mittleren Schaltschrank 3 vertikale Verteilschienen angeordnet sind, die an die Hauptschienen mittels elektrisch leitender, in den Stromführungseigenschaften angepasster Verbindungselemente angeschlossen sind. Die Verteilschienen verlaufen senkrecht durch mehrere Funktionsräume und sind auf der Vorderseite von Rückwandabschnitten in Form von den Funktionsräumen zugeordneten Montageplatten 40 mittels entsprechender Sammelschienenhalter montiert und vom Innenraum der Funktionsräume aus zugänglich. Auf den Verteilschienen sind entsprechende Geräteadapter für den Anschluss von Gerätekomponenten kontaktierend aufgesetzt. Zwischenräume zwischen den Geräteadaptern sind mittels isolierender Abdeckungen berührungssicher zum Innenraum der Funktionsräume hin verschlossen. Die Verteilschienen verlaufen durch mehrere übereinander angeordnete Funktionsräume, wobei im hinteren Bereich von horizontalen Raumteilerböden 30 (vgl. auch Fig. 6 und 14) entsprechende Ausschnitte 32 vorgesehen sind, die an die Ausdehnung der Verteilschienen mit Abdeckungen angepasst sind.

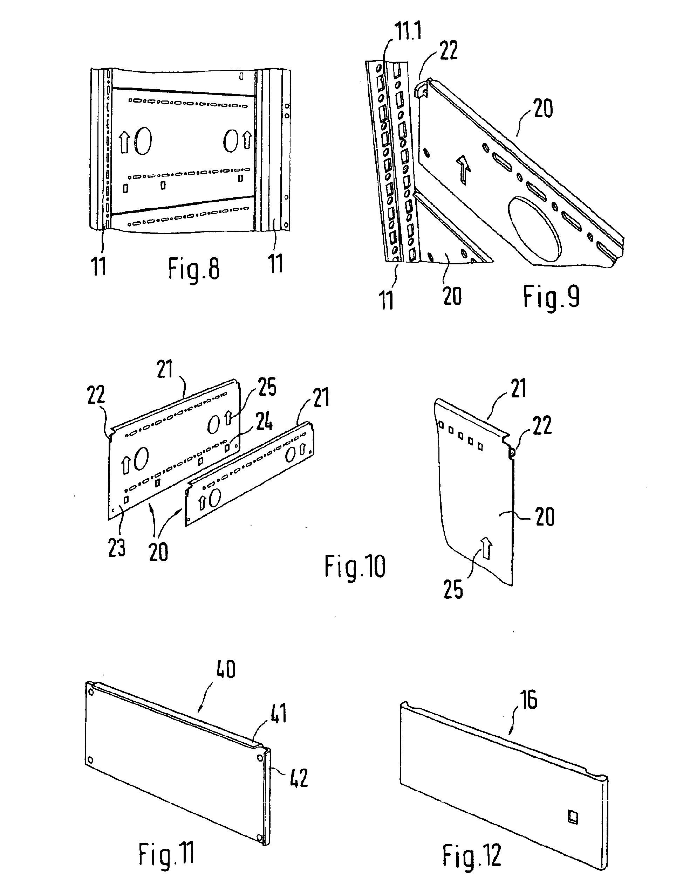

Ferner zeigt Fig. 1, dass die Schaltschränke 2, 3, 4 Rahmengestelle 10 mit vier in den Eckbereichen angeordneten vertikalen Rahmenschenkeln 11 und Deckrahmen mit in Breitenrichtung und Tiefenrichtung verlaufenden Rahmenschenkeln 12.1 bzw. 12.2 aufweisen. Ferner sind die Schaltschränke 2, 3, 4 mit jeweiligen Sockeln 13 versehen. Im Bereich des vorderen Randes der Raumteilerböden 30 sind im Querschnitt U-förmige Trennstege 15 angeordnet, deren Öffnungsseiten nach vorn gerichtet sind, wobei die freien Enden der Seitenschenkel 15.1, 15.3 bündig sind mit den vorderen Rändern der vertikalen Rahmenschenkel 11 bzw. der Frontebene des Rahmengestells 10. Auf der Vorderseite des Deckrahmens 12 ist eine obere Frontblende 14 angebracht. Zum Verschließen der Frontseite der Schaltschränke ist entweder eine von oben bis unten durchgehende Fronttür oder es sind den jeweiligen Funktionsräumen zugeordnete und in der Höhe angepasste Teiltüren 16 (vgl. Fig. 12) vorgesehen, die an jeweiligen, an den vertikalen Rahmenschenkeln 11 angebrachten Scharnierteilen 16.1 mit komplementären Scharnierteilen gelenkig gelagert und an jeweils zugeordneten, an den gegenüberliegenden vertikalen Rahmenschenkeln 11 angeordneten Verschlussteilen 16.2 getrennt verschließbar sind.

Die horizontal übereinander liegenden Teilräume 5 in Form der Funktionsräume sind seitlich mit an die Höhe der Funktionsräume angepassten Seitenwandabschnitten 20 begrenzt, die mit ihrem vorderen vertikalen Randbereich an den dortigen vertikalen Rahmenschenkeln 11 und an ihrem hinteren vertikalen Randbereich entweder an den hinteren vertikalen Rahmenschenkeln 11 oder an vertikalen Montageschenkeln angebracht sind, die in der Ebene der Rückwandabschnitte der Funktionsräume angeordnet sind. Zusätzlich zu den die Funktionsräume seitlich begrenzenden Seitenwandabschnitten 20 sind die betreffenden Schaltschränke 2 bzw. 4 mit durchgehenden äußeren Seitenwänden abgeschlossen, ebenso wie auch die Rückseite der Schrankanordnung 1 sowie deren Oberseite.

Die Seitenwände 20 sind an ihrem oberen Randbereich zunächst unter stumpfem Winkel schräg nach innen und oben bezüglich des Funktionsraums und dann wiederum nach außen und oben parallel zu dem oberen Rand abgewinkelt, wie auch die Fig. 9 und 10 erkennen lassen. Im oberen Eckbereich ist ein nach außen von der Ebene des Seitenwandabschnittes 20 vorstehendes abgebogenes Hakenelement 22 angeordnet, das an die Länge von vertikal gerichteten Langlöchern in dem betreffenden vertikalen Rahmenschenkel 11 bzw. Montageschenkel angepasst und in diesen mit einer nach unten zeigenden Haltenase einhängbar ist. Dabei ist vorzugsweise vorgesehen, dass die vertikalen Rahmenschenkel 11 eine den vorderen Rahmenbereich des Rahmengestells 10 umgrenzende innere seitliche Montageebene und eine davon von der Frontseite abgekehrt liegende zur Seite nach außen abgesetzte, ebenfalls zur Innenseite der Rahmenschenkel 11 gekehrte äußere seitiche Montageebene aufweisen, wobei sowohl die innere als auch die äußere ebene aufweisen, wobei sowohl die innere als auch die äußere Montageebene der vertikalen Rahmenschenkel 11 Befestigungslochreihen aufweisen. Die Seitenwandabschnitte 20 sind mit den Hakenelementen vorzugsweise in der äußeren, seitlich zurückversetzten Montageebene eingehängt, wobei auch der vertikale Montageschenkel eine entsprechende Befestigungslochreihe in der entsprechenden Ebene aufweist. Zusätzlich zu den Hakenelementen 22 sind im unteren vorderen und hinteren Eckbereich der Seitenwandabschnitte 20 Befestigungslöcher angeordnet, die sich mit Befestigungsöffnungen in den vertikalen Rahmenschenkeln 11 bzw. den betreffenden vertikalen Montageschenkeln decken und zum Sichern eine Schraubverbindung ermöglichen. Zudem weisen die Seitenwandabschnitte 20 an ihrem unteren Randbereich 23 und gegebenenfalls auch in ihrem oberen Randbereich 21 bzw. oberen Abschnitt eine horizontal verlaufende Lochanordnung 24 auf. Zur richtigen Orientierung mit dem in der genannten Weise abgebogenen oberen Rand nach oben sind die Seitenwandabschnitte 20 jeweils mit Ausrichtmarken 25 in Form eines nach oben gerichteten Pfeils versehen. Ferner weisen sie eine mittels einer abnehmbaren Platte abgedeckte oder an einer Perforierung ausbrechbare Öffnung für eine seitliche Zugänglichkeit z. B. in einen daneben angeordneten Kabelraum auf. Die Seitenwandabschnitte 20 sind in ihrer Höhe an die Höhe eines Funktionsraumes vorzugsweise in einem bestimmten Rastermaß, insbesondere entsprechend ganzzahligen Vielfachen von Höheneinheiten HE angepasst. Dabei können Seitenwandabschnitte 20 unterschiedlicher Höhe vorgesehen sein, um unterschiedlich hohe Funktionsräume zu bilden.

Entsprechend sind auch die Höhen der Teil-Montageplatten 40 und der Teiltüren 16 in einem bestimmten Rasterabstand, insbesondere entsprechend ganzzahligen Vielfachen von Höheneinheiten an die Höhe von Funktionsräumen angepasst, so dass sich eine Art Baukastensystem zum Aufbau gewünschter Funktionsräume ergibt, die entsprechend den Lochreihen und deren Raster in den vertikalen Rahmenschenkeln 11 sowie den vertikalen Montageschenkeln auch in 11 sowie den vertikalen Montageschenkeln auch in unterschiedlichen Höhen des Schaltschrankinnenraums anordenbar sind.

Zum Anordnen der Raumteilerböden 30 sind seitlich an den Seitenwandabschnitten 20 und/oder den vertikalen Rahmenschenkeln 11 bzw. den vertikalen Montageschienen anbringbare Montagewinkel 70 vorgesehen, die mit einem vertikalen Schenkel 72 entlang dem betreffenden Seitenwandabschnitt 20 verlaufen und mit ihrem horizontalen Schenkel 71 zum Inneren des Schrankraumes vorstehen, wobei zwei sich gegenüberliegende horizontale Schenkel 71 einen Raumteilerboden 30 auf ihrer Oberseite aufnehmen, der mittels in Öffnungen einer Lochreihe 73 bzw. einer Lochanordnung 31 (vgl. Fig. 13 und 14) eingreifender Elemente, insbesondere Schrauben verbindbar ist. Die horizontalen Schenkel 71 stehen dabei über die innere Montageebene der vertikalen Rahmenschenkel 11 in den Innenraum vor und die Ausdehnung des Raumteilerbodens 30 in Breitenrichtung ist vorteilhafterweise höchstens so breit bemessen, wie der Abstand zweier sich gegenüberliegender innerer Montageebenen, so dass der Raumteilerboden 30 ohne Schwierigkeiten in den Schaltschrankinnenraum eingeführt und an den Montagewinkeln 70 festgelegt werden kann, wobei auch der Ausschnitt 32 relativ zu den Verteilschienen passend positioniert ist.

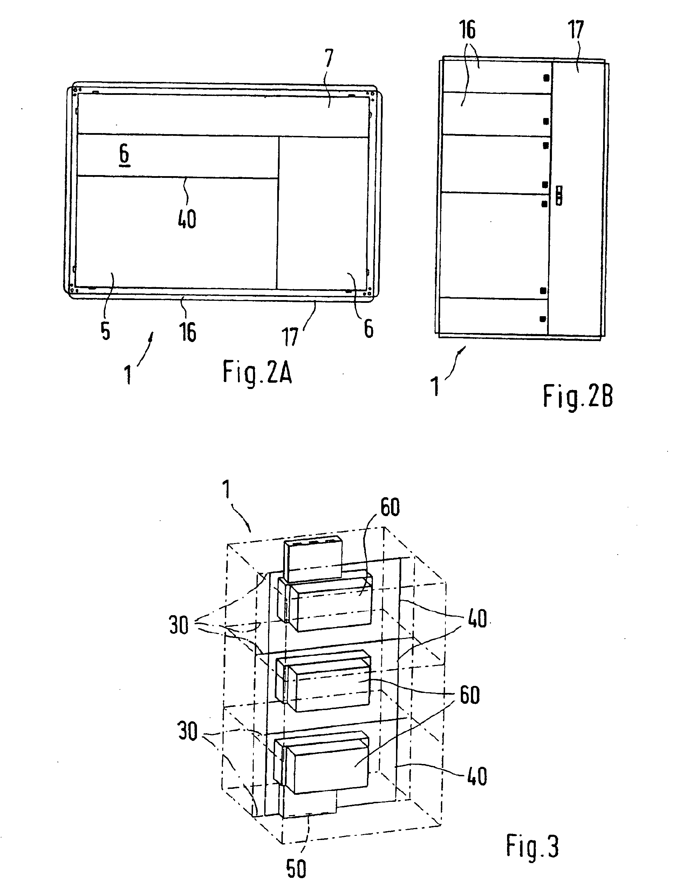

Die Fig. 2A und 2B zeigen Raumeinteilungsmöglichkeiten des Innenraums eines Schaltschranks zum einen in horizontaler Richtung durch Vertikaltrennwände und zum anderen in vertikaler Richtung durch die horizontalen Raumteilerböden 30.

Die Fig. 3, 4, 5 lassen die Verteilschienenanordnung 50 mit Sammelschienenabdeckung 51 und auf die Verteilschienenanordnung 50 aufgesetzten Geräteadaptern 52 sowie daran angeschlossenen Schaltgeräten 60 erkennen. Auch Fig. 6 lässt die durch mehrere Funktionsräume verlaufende Anordnung der Verteilschienen 50 und ihre Durchführung durch die Ausschnitte 32 im hinteren Bereich der Raumteilerböden 30 erkennen. Wie Fig. 14 zeigt, kann der Ausschnitt 32 mittels einer Perforierung 33 im hinteren Randbereich des Raumteilerbodens 30 zum einfachen Ausbrechen vorbereitet sein, wobei der Ausschnitt 32 zum hinteren Rand des Raumteilerbodens 30 offen ist, so dass auch dadurch der Raumteilerboden 30 ohne Weiteres nachträglich in beliebiger Höhe des Schaltschrankinnenraumes angeordnet und auch wieder herausgenommen werden kann, ohne die Verteilschienenanordnung 50 entfernen zu müssen.

Wie die Fig. 13 erkennen lässt, kann der Montagewinkel 70 mittels Befestigungslöchern 74, 75 und gegebenenfalls zur Seite auf der vom Innenraum abgekehrten Rückseite ausgebogener hakenförmiger Laschen an dem betreffenden Seitenwandabschnitt in deren Lochanordnung 24 eingehängt bzw. mit diesem verbunden werden.

Wie Fig. 15 zeigt, besitzen die U-förmigen Trennstege 15 in Verlängerung ihres Grundsteges 15.2 seitliche Befestigungsabschnitte 15.4 (auf beiden Seiten), die im eingebauten Zustand Absätze an den vertikalen Rahmenschenkeln 11 auf deren Rückseite hintergreifen und mittels durch Befestigungsöffnungen eingeführter Schrauben von der Rückseite befestigt werden. Außerdem können im Eckbereich der Befestigungsabschnitte 15.4 Freibereiche und zurückgebogene Halteelemente 15.41 gebildet sein.

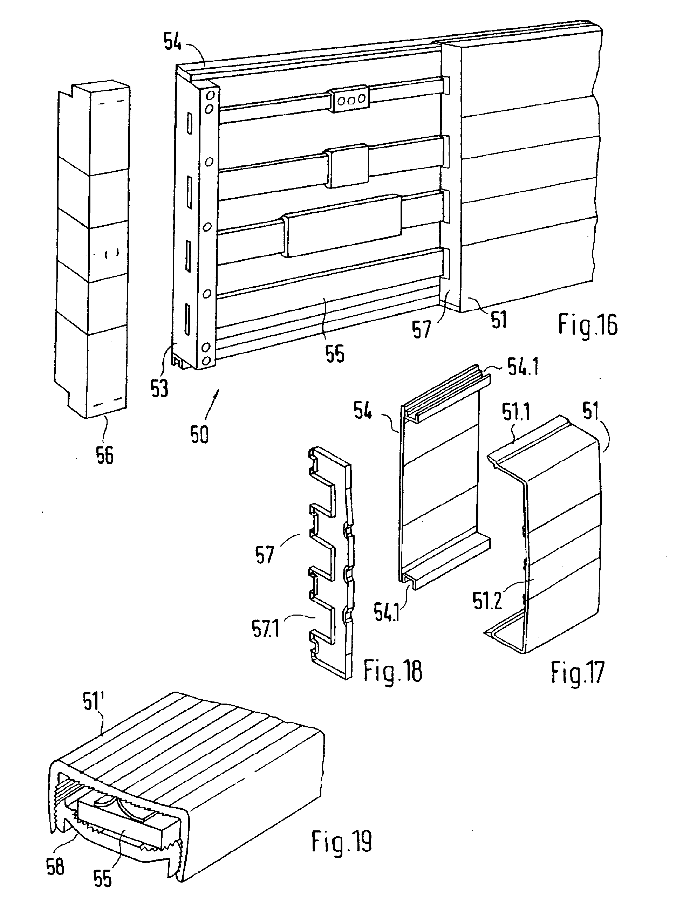

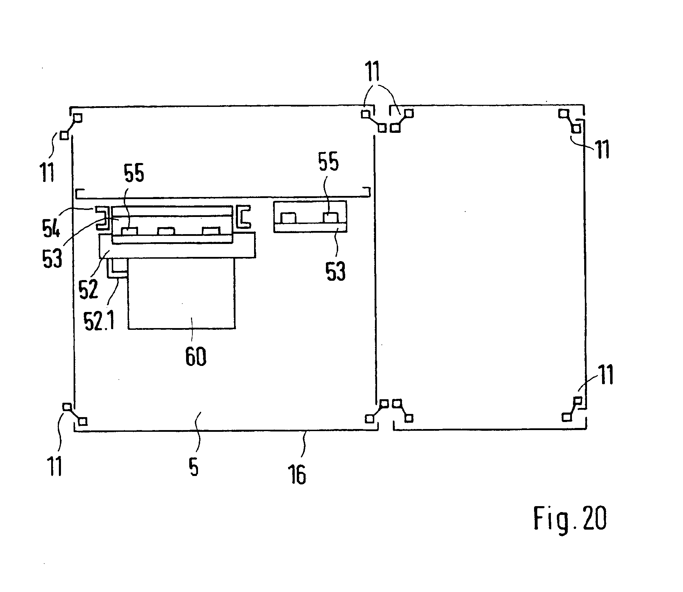

Fig. 16 zeigt eine Sammelschienenanordnung, beispielsweise die Verteilschienenanordnung 50 (vgl. Fig. 20), wobei der Aufbau in ähnlicher Weise auch für eine Hauptschienenanordnung 80 (vgl. Fig. 1) Anwendung finden kann. Die Sammelschienen, vorliegend also die Verteilschienen 55, sind in einem wannenförmigen, im Querschnitt U-förmigen Sammelschienenträger 54 mit einem entsprechend der Anordnung der Sammelschienen relativ breit ausgedehnten Bodenteil und im Vergleich dazu relativ niedrigen Rändern aufgenommen. Die Ränder sind als Haltestege 54.1 mit Haltestrukturen ausgestaltet, um daran die sich über die ganze Breite des Sammelschienenträgers 54 erstreckende Abdeckung 51 mit entsprechenden Gegenstrukturen aufzuschnappen bzw. aufzurasten, wobei die Verteilschienen 55 mittels eines Deckelteils 51.2 abgedeckt und die Gegenstrukturen an an dem Deckelteil seitlich vorstehenden Seitenteilen 51.1 angeformt sind.

Auf diese Weise wird eine isolierende, berührungssichere Abdeckung der Sammelschienen bzw. Verteilschienen 55 erhalten, die z. B. an Freibereiche zwischen auf die Sammelschienen aufgesetzten Adaptern angepasst werden kann. Um auch frontseitig in dem Bereich zwischen dem Deckelteil 51.2 der Abdeckung 51 und den Sammelschienen sowie dem Bodenteil des Sammelschienenträgers eine Abdichtung und auch eine Abstützung im Endbereich der Abdeckung 51 zu erhalten, ist dort eine Stützblende 57 vorgesehen, die an den Querschnitt des Raums zwischen der Abdeckung und dem Sammelschienenträger angepasst und mit Ausnehmungen 57.1 für die Sammelschienen versehen ist, wie die Fig. 16 und 18 zeigen. Die Stützblende 57 besitzt in ihrem der Unterseite der Abdeckung 51 zugekehrten Randbereich Haltenuten, die mit Vorsprüngen an der Unterseite der Abdeckung 51 fixierend zusammenwirken.

Die Sammelschienen sind in dem wannenartigen Sammelschienenträger 54 mittels darin eingesetzter und festgelegter Sammelschienenhalter 53 angebracht, wobei die Sammelschienenhalter 53 einen Unterteil mit Ausnehmungen für die Sammelschienen 55 und einen darauf aufsetzbaren und mit Schrauben fixierbaren Oberteil aufweisen. Um einen stirnseitigen, berührungssicheren Abschluss zu erhalten, ist eine stirnseitige Abdeckung 56 vorgesehen, die mit einem oberen Bereich auch einen seitlich angeordneten Sammelschienenhalter 53 überragt.

Der Sammelschienenträger mit darin angeordneten Sammelschienen 55 und der Abdeckung sowie den Geräteadaptern wird bei der Verteilschienenanordnung 50 auf den Montageplatten 40 vertikal durch mehrere Funktionsräume verlaufend angebracht, wie vorstehend beschrieben. Entsprechend kann für die Hauptschienenanordnung 80 der Sammelschienenträger 54 mit den Sammelschienen horizontal im hinteren Innenraumbereich montiert werden. Die Verbindung zwischen Hauptschienen und Verteilschienen 55 erfolgt mit lamellierten Kupferschienen und Anschlussklemmen oder Bolzen oder auch mittels flexibler Leiter und Anschlusselementen. Zum Herstellen der Verbindung sind neben vollständig geschlossenen Montageplatten auch Montageplatten mit Aussparungen für die Durchführung vorgesehen. Die Durchführungen sind mit Kabeltüllen und/oder Isolierstoff verschlossen.

Fig. 19 zeigt eine einzeln auf einer isolierenden Einzelaufnahme 58 aufgenommene Sammelschiene 55, die mit einer Einzelabdeckung 51' berührungssicher abgedeckt ist. Die Einzelaufnahme ist hierbei ebenfalls an seitlichen Haltestrukturen der Einzelaufnahme 58 mit auf der Innenseite von Seitenabschnitten angeordneten Gegenstrukturen rastend aufgesetzt und besitzt auf der Innenseite Stützmittel, um die Sammelschiene 55 auf abgestuften Aufnahmeelementen zu fixieren.

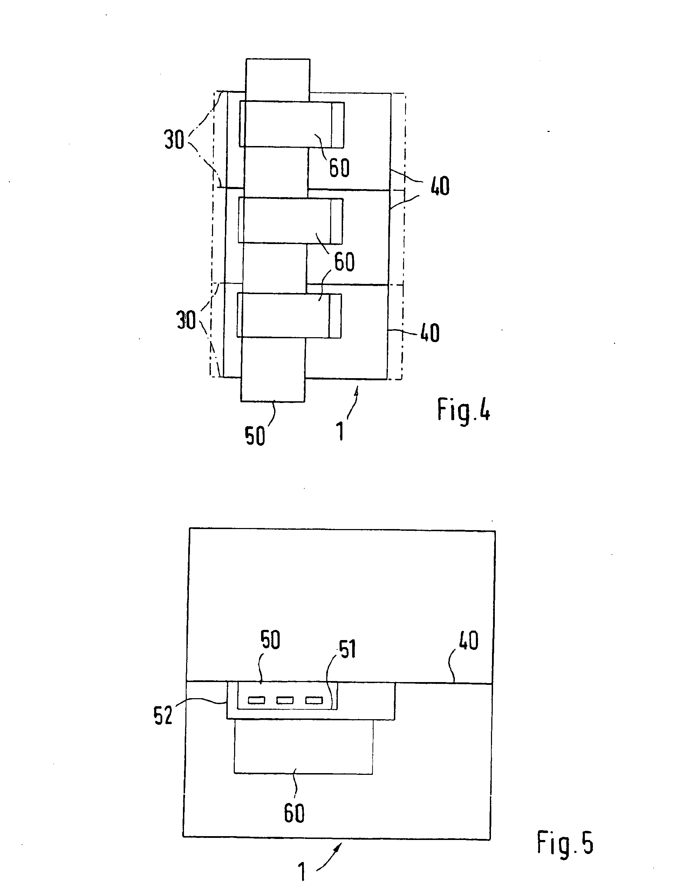

Fig. 20 zeigt eine ähnliche Darstellung wie Fig. 5, wobei jedoch zusätzlich ein seitlich neben den Funktionsräumen 5 angeordneter Teilraum, beispielsweise Kabelrangierraum, sowie die vertikalen Rahmenschenkel 11 mit der inneren und äußeren Montageebene dargestellt sind. Auch eine Verbindung 52.1 zwischen der Gerätekomponente 60 und dem Geräteadapter 52 ist eingezeichnet. Ferner ist der auf der Montageplatte 40 montierte Sammelschienenträger 54 mit den darauf festgelegten Sammelschienenhaltern 53 dargestellt, wie auch in Fig. 16 gezeigt. Auf der Montageplatte ist des Weiteren ein Teilsystem der Verteilschienen mit zwei Verteilschienen 55 angeordnet.

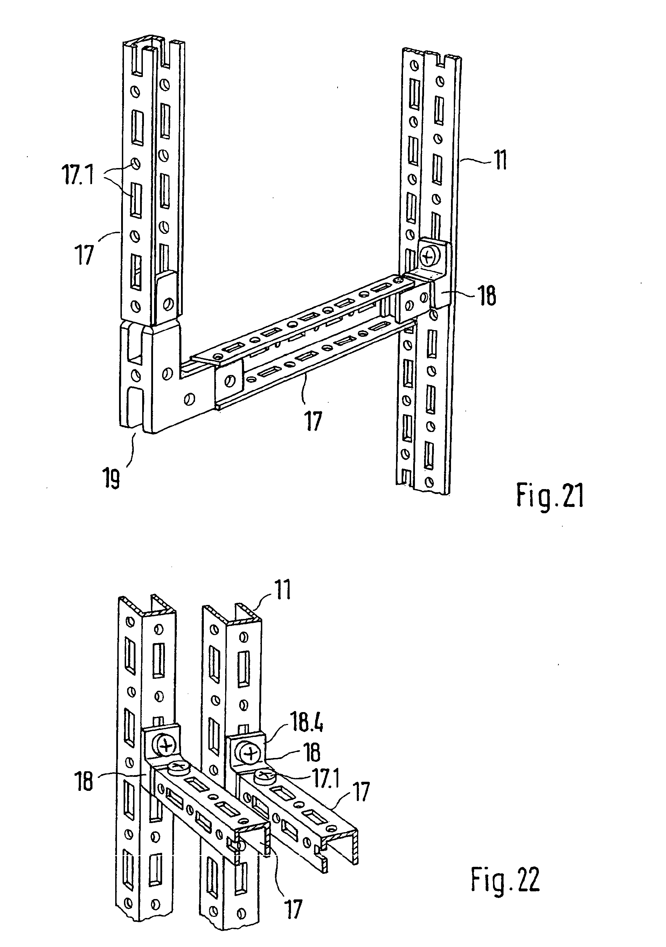

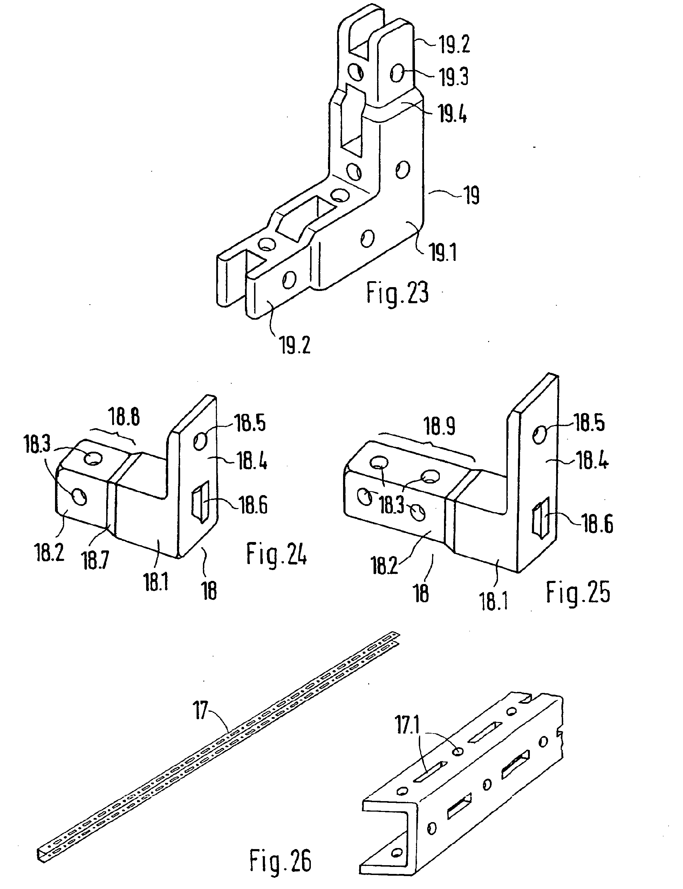

Fig. 21 zeigt eine nähere Darstellung zur Anbindung von Montageschienen 17, wie sie auch in Fig. 1 vorgenommen ist. Beispielsweise werden an hinteren vertikalen Rahmenschenkeln 11 des Rahmengestells 10 entweder in der vorderen oder hinteren Montageebene der betreffenden vertikalen Rahmenschenkel 11 (vgl. auch Fig. 22) mittels zugeordneter Anschlussstücke 18 z. B. in Tiefenrichtung verlaufende horizontale Montageschienen 17 angebunden, die über einen jeweiligen Eckverbinder 19 oder auch T- oder Kreuzverbinder mit weiteren Montageschienen verbunden werden können, wie z. B. der gezeigte vertikal nach oben gerichteten Montageschiene 17. Die Montageschienen 17 und Rahmenschenkel 11 besitzen jeweilige Befestigungslochreihen bzw. eine Systemlochung 17.1 mit gleichem Rasterabstand und abwechselnd schlitzförmig in Längsrichtung gerichteten und dazwischen jeweils angeordneten runden Löchern 17.1. Wie insbesondere auch aus Fig. 22 ersichtlich, sind die Anschlussstücke 18 mittels Verbindungsabschnitten 18.4 an der betreffenden Anbindungsebene der Rahmenschenkel festgelegt und mittels Schrauben gesichert, die durch eine jeweilige Haltebohrung 18.5 geführt sind, wie die Fig. 24 und 25 näher zeigen.

Der Verbindungsabschnitt 18.4 ist, wie die Fig. 24 und 25 zeigen, mit einer von der Verbindungsebene abstehenden hakenartigen Haltenase versehen, deren Einführungsquerschnitt in etwa an die rechteckförmigen Schlitze der Systemlochung 17.1 bzw. Befestigungslochreihen der Rahmenschenkel angepasst ist, um das Anschlussstück 18 in den schlitzartigen Löchern vorzufixieren und anschließend mittels der durch die Durchgangsbohrung 18.5 geführten Schraube zu fixieren. An dem Anschlusskörper 18.1 des Anschlussstückes 18 ist rechtwinklig bezüglich der Verbindungsebene des Verbindungsabschnittes 18.4 abstehend ein im Querschnitt rechteckförmiger oder vorzugsweise quadratischer Koppelabschnitt 18.2 mit vier Auflageflächen 18.8, 18.9 angeformt, deren Ebenen im angebundenen Zustand des Anschlussstückes 18 parallel zur senkrechten bzw. waagrechten Schaltschrankebene ausgerichtet sind. In den Auflageflächen 18.8, 18.9 sind Gewindebohrungen 18.3 eingebracht, in die durch die betreffenden Löcher der Systemlochung 17.1 der Montageschiene 17 geführte Schrauben eingedreht werden können. Für eine eindeutige, stabile Anbringung der Montageschiene 17 geht der Koppelabschnitt 18.2 über einen rundum verlaufenden Absatz in den erweiterten Abschnitt des Anschlusskörpers 18.1 über, so dass sich ein bundartiger Anschlag ergibt, wobei die Höhe des Absatzes in etwa der Wandstärke der Montageschiene 17 entspricht. Die Montageschiene 17 ist als Profil mit mehreren rechtwinklig zueinander stehenden Profilschenkeln, vorliegend als U-Profil ausgebildet, wobei in allen Profilschenkeln gleiche Systemlochungen 17.1 angeordnet sind. Auch kann anstelle des U-Profils ein geschlossenes, z. B. quadratisches Hohlprofil eingesetzt werden, wobei aber die Montage umständlicher sein kann, da das U-Profil einfach von der Seite her auf montierte Anschlussstücke aufgeschoben werden kann. Im Querschnitt ist der Koppelabschnitt 18.2 an den Innenquerschnitt bzw. die Schenkelbreite der Montageschiene 17 angepasst. Wie die Fig. 24 und 25 erkennen lassen, ist die Haltenase 18.6 in Längsrichtung der Schlitze beidseitig mit hakenartigen Fortsätzen versehen, so dass die Anschlussstücke 18 mit ihren Verbindungsabschnitten 18.4 nach oben oder nach unten eingehängt werden können. Bei dem Ausführungsbeispiel nach Fig. 25 ist der Koppelabschnitt 18.2 gegenüber dem Ausführungsbeispiel nach Fig. 24 verlängert und in den Auflageflächen 18.9 sind zwei in axialer Richtung voneinander versetzte Gewindebohrungen 18.3 eingebracht. Vorteilhaft sind die Gewindebohrungen 18.3 bezüglich der Verbindungsebene des Verbindungsstücks 18.4 im Abstand eines ganzzahligen Vielfachen des Rasterabstandes eingebracht, so dass sich in Verbindung mit den Rahmenschenkeln 11, 12.1, 12.2 und gegebenenfalls weiterer Montageschienen stets eindeutige horizontale bzw. vertikale Anordnungen in rechtwinkliger Ausrichtung ergeben.

Entsprechend dem Anschlussstück 18 ist auch der Eckverbinder 19, allerdings an beiden Schenkeln mit steckbaren Koppelabschnitten bzw. Verbindungsabschnitten 19.2 versehen, die in ihrem Querschnitt an den Querschnitt der Montageschienen 17 angepasst und auf den jeweiligen Auflageflächen mit senkrecht zu diesen eingebrachten Gewindebohrungen 19.3 versehen sind, wie Fig. 23 zeigt. Entsprechend können auch T-Verbinder oder Kreuzverbinder gegebenenfalls mit räumlich zueinander gerichteten Anschlussschenkeln vorgesehen sein.

Die vorstehend beschriebenen Funktionsräume bzw. übrigen Teilräume können mittels in der beschriebenen Weise angebundener Montageschienen stabil und auf einfache Weise aufgebaut werden. Hierbei kann z. B. eine vertikale Montageschiene 17 ab einer gewissen Höhe innerhalb des Schaltschrankes in einer gewünschten Tiefe von der Vorderseite bzw. Rückseite des Schaltschrankes versetzt geführt werden, um daran Teil-Montageplatten 40 anzubringen. Die Seitenwandabschnitte 20 können mit ihren rückwärtigen vertikalen Rändern an den Montageschienen 17 angebracht sein oder durchgehend bis zu den hinteren vertikalen Rahmenschenkeln 11 verlaufen. Auch können mittels seitlich in Breitenrichtung verlaufender Montageschienen 17 Kabelrangierräume beliebiger Breite abgeteilt werden.

Der beschriebene modulare Aufbau für die Teilräume im Inneren des Schaltschrankes lässt eine variable Gestaltung bei einfacher Montage zu, wobei auch hohe Anforderungen an die Funktionssicherheit erfüllt werden, wie sie bei Niederspannungsanlagen gefordert sind.

## Patentansprüche

1. Schaltschrankanordnung mit mindestens einem Schaltschrank (2, 3, 4), der ein aus vertikalen und horizontalen Rahmenschenkeln (11, 12.1, 12.2) aufgebautes Rahmengestell (10) aufweist und in seinem Inneren mit Montageteilen einschließlich Montageschienen (17) ausgerüstet ist zur variablen Gestaltung der Innenraumaufteilung, wobei die Rahmenschenkel (11, 12.1, 12.2) mit Befestigungslochreihen in bestimmtem Raster versehen sind, wobei zum Anbinden der Montageschienen (17) an den Rahmenschenkeln (11, 12.1, 12.2) einstöckige Anschlussstücke (18) vorgesehen sind, die einen in ihrem angebrachten Zustand rechtwinklig von der Anbindungsebene des zugeordneten Rahmenschenkels (11, 12.1, 12.2) abstehenden Koppelabschnitt aufweisen, welcher quadratischen oder rechteckförmigen Querschnitt und mindestens eine darin eingebrachte, quer verlaufende Gewindebohrung (18.3) besitzt, wobei die vier Ebenen des Koppelabschnittes (18.2) parallel zur vertikalen und horizontalen Ebene des Schaltschranks (2, 3, 4) liegen und jedes Anschlussstück (18) zum Anbinden an dem betreffenden Rahmenschenkel (11, 12.1, 12.2) einen Verbindungsabschnitt (18.4) mit einer parallel zu der Anbindungsebene des Rahmenschenkels (11, 12.1, 12.2) verlaufenden Verbindungsebene aufweist, an der eine in ein Befestigungsloch des Rahmenschenkels (11, 12.1, 12.2) einhängbare hakenartige Haltenase (18.6) vorsteht,
**dadurch gekennzeichnet,**
**dass** zum Verbinden horizontal und vertikal angeordneter Montageschienen (17) Eckverbinder (19), Kreuzverbinder und/oder T-Stücke mit im Querschnitt quadratischen oder rechteckförmigen Verbindungsabschnitten (19.2) vorgesehen sind, die in ihrer Querschnittsabmessung an die Breite der Profilschenkel der Montageschienen (17) angepasst sind und in Anpassung an den Rasterabstand der Befestigungslochreihen in ihren Auflageflächen mit quer verlaufenden Gewindelöchern (19.3) versehen sind.

2. Schaltschrankanordnung nach Anspruch 1,
**dadurch gekennzeichnet,**
**dass** in jeder Ebene des Koppelabschnittes (18.2) mindestens eine Gewindebohrung (18.3) eingebracht ist, deren Abstand zu der Anbindungsebene deszugeordneten Rahmenschenkels (11, 12.1, 12.2) einem ganzzahligen Vielfachen des Rasterabstandes entspricht.

3. Schaltschrankanordnung nach Anspruch 1,
**dadurch gekennzeichnet,**
**dass** in dem Verbindungsabschnitt (18.4) des Anschlussstückes (18) eine Durchgangsbohrung (18.5) zum Durchführen einer Befestigungsschraube eingebracht ist.

4. Schaltschrankanordnung nach einem der vorhergehenden Ansprüche,
**dadurch gekennzeichnet,**
**dass** die Montageschiene (17) mehrere im Querschnitt rechtwinklig zueinander stehende Profilschenkel aufweist, deren Breite an den Querschnitt des Koppelabschnittes (18.2) des Anschlussstückes (18) angepasst ist.

5. Schaltschrankanordnung nach einem der vorhergehenden Ansprüche,
**dadurch gekennzeichnet,**
**dass** die Montageschiene (17) im Querschnitt rechtwinklig mit zwei Schenkeln, U-förmig, C-förmig oder als geschlossenes Hohlprofil ausgebildet und an den Querschnitt des Koppelabschnittes (18.2) angepasst ist und
**dass** die Montageschiene (17) in allen Profilschenkeln mit gleichen Befesti gungslochreihen wie die Rahmenschenkel (11, 12.1. 12.2) versehen ist.

6. Schaltschrankanordnung nach einem der vorhergehenden Ansprüche,
**dadurch gekennzeichnet,**
**dass** der Koppelabschnitt (18.2) allseitig über einen Absatz (18.7) in den angrenzenden, erweiterten Abschnitt des Anschlussstückes (18) übergeht, wobei die Höhe des Absatzes in etwa der Wandstärke der Montageschiene (17) entspricht.

7. Schaltschrankanordnung nach einem der vorhergehenden Ansprüche,
**dadurch gekennzeichnet,**
**dass** die Befestigungslochreihen abwechselnd runde und in Längsrichtung der Rahmenschenkel (11, 12.1, 12.2) oder Montageschienen (17) schlitzförmige 20 Löcher aufweisen.

8. Schaltschrankanordnung nach einem der vorhergehenden Ansprüche,
**dadurch gekennzeichnet,**
**dass** die Rahmenschenkel (11, 12.1, 12.2) in Breitenrichtung und/oder in Tiefenrichtung voneinander abgesetzte Montageebenen aufweisen und
**dass** Anschlussstücke (18) für die Anbindung in beiden Montageebenen vorgesehen sind.

9. Schaltschrankanordnung nach einem der vorhergehenden Ansprüche,
**dadurch gekennzeichnet,**
**dass** vertikale Montageschienen (17) an Rahmenschenkeln (11, 12.1, 12.2) und/oder horizontalen Montageschienen (17) in Tiefenrichtung im Inneren der Schaltschrankanordnung versetzt angebunden sind und
**dass** in Tiefenrichtung vor den vertikalen Montageschienen (17) übereinander angeordnete und mittels horizontaler Raumteilerböden (30) voneinander getrennte Funktionsräume gebildet sind, die auf ihrer Rückseite mit an den vertikalen Montageschienen (17) angebrachten Montageplatten (40) abgeschlossen sind, auf deren Innenseite vertikal durch mehrere Funktionsräume verlaufende Verteilschienen (55) zur Stromversorgung von in den Funktionsräumen aufgenommenen Gerätekomponenten montiert sind.

## Claims

1. A control box arrangement comprising at least one control box (2, 3, 4) having a frame (10) constructed from vertical and horizontal frame legs (11, 12.1, 12.2) and an interior equipped with mounting parts including mounting rails (17) to permit a variable subdivision of the interior, wherein the frame legs (11, 12.1, 12.2) are provided with rows of fastening holes in a defined pattern, wherein one-piece connecting pieces (18) for connecting the mounting rails (17) to the frame legs (11, 12.1, 12.2) are provided which have a coupling section (18.2) protruding at right angles from the attachment plane of the associated frame leg (11, 12.1, 12.2) when the connecting piece is in a mounted position, the coupling section (18.2) having a square cross section or a rectangular cross section and containing at least one transversally extending threaded bore (18.3), and four planes of the coupling section (18.2) oriented parallel to a vertical plane and a horizontal plane of the control box (2, 3, 4), and, for attachment to the associated frame leg (11, 12.1, 12.2), each connecting piece (18) has an attaching section (18.4) with an attachment plane that extends parallel to the attachment plane of the frame leg (11, 12.1, 12.2) and that has a hook securing projection (18.6) protruding from it and hookable into a fastening hole of the frame leg (11, 12.1, 12.2),
**characterized in that**
for connecting horizontally and vertically arranged mounting rails (17), corner connectors (19), cross connectors, and/or T-pieces have connecting sections (19.2) that are square or rectangular in cross section and that have cross-sectional dimensions matched to widths the profile legs of the mounting rails (17) and have transversely extending threaded bores (19.3) in their support surfaces matched to a pattern spacing of the rows of fastening holes.

2. The control box arrangement as recited in claim 1, **characterized in that** each plane of the coupling section (18.2) contains at least one threaded bore (18.3) with a distance from the attachment plane of the associated frame leg (11, 12.1, 12.2) corresponds to an integral multiple of a pattern spacing.

3. The control box arrangement as recited claim 1, **characterized in that** in the attaching section (18.4) of the connecting piece (18) a through bore (18.5) allows a fastening screw to be inserted through.

4. The control box arrangement as recited in any of the preceding claims, **characterized in that** the mounting rail (17) has a plurality of profile legs oriented at right angles to one another and a width matched to a cross section of the coupling section (18.2) of the connecting piece (18).

5. The control box arrangement as recited in any of the preceding claims, **characterized in that** a second cross section of the mounting rail (17) forms a right angle as a two-leg shape, a U-shape, a C-shape or in a shape of a closed hollow profile and is matched to the cross section of the coupling section (18.2) and all of the profile legs of the mounting rail (17) have similar rows of fastening holes as the frame legs (11, 12.1, 12.2).

6. The control box arrangement as recited in any of the preceding claims, **characterized in that** the coupling section (18.2) transitions via a shoulder (18.7) on all sides into an adjacent widened section of the connecting piece (18) and a height of the shoulder corresponds approximately to a wall thickness of the mounting rail (17).

7. The control box arrangement as recited in any of the preceding claims, **characterized in that** the rows of fastening holes have an alternating pattern of round holes and slot-shaped holes extending in a longitudinal direction of the frame legs (11, 12.1, 12.2) or the mounting rails (17).

8. The control box arrangement as recited in any of the preceding claims, **characterized in that** the frame legs (11, 12.1, 12.2) have mounting planes that are offset from each other in the width direction and/or in a depth direction and connecting pieces (18) are used for attachment in both mounting planes.

9. The control box arrangement as recited in any of the preceding claims, **characterized in that** vertical mounting rails (17) are attached to frame legs (11, 12.1, 12.2) and/or the horizontal mounting rails (17) offset in the depth direction toward the inside of the control box arrangement and in the depth direction in front of the vertical mounting rails (17) functional compartments are formed one above the other and divided from one another by horizontal compartment-dividing floors (30), and closed at a rear by mounting plates (40) attached to the vertical mounting rails (17), distributing rails (55) extend vertically through a plurality of functional compartments supply power to device components accommodated in the functional compartments, and are mounted to an inside surface of the mounting plates (40).

## Revendications

1. Disposition d'armoire de commande avec au moins une armoire de commande (2, 3, 4), qui comprend un châssis (10) constitué de montants de châssis verticaux et horizontaux (11, 12.1, 12.2) et qui est muni, à l'intérieur, de parties de montage, y compris des rails de montage (17) pour l'aménagement variable de l'intérieur, les montants de châssis (11, 12.1, 12.2) étant munis de rangées de trous de fixation à des intervalles déterminés, des éléments de raccordement (18) étant prévus pour la fixation des rails de montage (17) sur les montants de châssis (11, 12.1, 12.2), qui comprennent une partie d'accouplement écartée, avec un angle droit, dans leur état monté, du plan de fixation du montant de châssis (11, 12.1, 12.2) correspondant, qui présente une section transversale carrée ou rectangulaire et au moins un alésage taraudé (18.3) réalisé à l'intérieur et s'étendant transversalement, les quatre plans de la partie d'accouplement (18.2) étant parallèles au plan vertical et au plan horizontal de l'armoire de commande (2, 3, 4) et chaque élément de raccordement (18) comprenant, pour la fixation au montant de châssis (11, 12.1, 12.2) correspondant, une partie d'assemblage (18.4) avec un plan d'assemblage parallèle au plan de fixation du montant de châssis (11, 12.1, 12.2), sur laquelle se trouve un embout de maintien (18.6) en forme de crochet pouvant être accroché dans un trou de fixation du montant de châssis (11, 12.1, 12.2),
**caractérisé en ce que**
pour l'assemblage, des rails de montages (17), des connecteurs angulaires (19), des connecteurs croisés et/ou des raccords en T, horizontaux et verticaux, sont munis de parties d'assemblage (19.2) de section transversale carrée ou rectangulaire, dont les dimensions sont adaptées à la largeur des montants profilés des rails de montage (17) et sont munis, sur leur surface d'appui, pour s'adapter à l'intervalle des rangées de trous de fixation, de trous taraudés (19.3) s'étendant transversalement.

2. Disposition d'armoire de commande selon la revendication 1
**caractérisée en ce que**
sur chaque plan de la partie d'accouplement (18.2), est réalisé au moins un alésage taraudé (18.3), dont la distance par rapport au plan de fixation du montant de châssis (11, 12.1, 12.2) correspondant correspond à un multiple entier de l'intervalle.

3. Disposition d'armoire de commande selon la revendication 1
**caractérisée en ce que**
dans la partie d'assemblage (18.4) de l'élément de raccordement (18), est réalisé un alésage de passage (18.5) pour le passage d'une vis de fixation.

4. Disposition d'armoire de commande selon l'une des revendications précédentes
**caractérisée en ce que**
le rail de montage (17) comprend, dans sa section transversale, plusieurs montants profilés disposés à angle droit les uns par rapport aux autres, dont la largeur est adaptée à la section transversale de la partie d'accouplement (18.2) de l'élément de raccordement (18).

5. Disposition d'armoire de commande selon l'une des revendications précédentes
**caractérisée en ce que**
le rail de montage (17) est conçu, dans sa section transversale, à angle droit avec deux montants, en forme de U, en forme de C ou comme un profil creux fermé et est adapté à la section transversale de la partie d'accouplement (18.2) et
**en ce que** le rail de montage (17) est muni, dans tous les montants profilés, de rangées de trous de fixation identiques aux montants de châssis (11, 12.1, 12.2).

6. Disposition d'armoire de commande selon l'une des revendications précédentes
**caractérisée en ce que**
la partie d'accouplement (18.2) se transforme, de tous les côtés, par l'intermédiaire d'un épaulement (18.7), dans la partie adjacente élargie de l'élément de raccordement (18), la hauteur de l'épaulement correspondant approximativement à l'épaisseur de paroi du rail de montage (17).

7. Disposition d'armoire de commande selon l'une des revendications précédentes
**caractérisée en ce que**
les rangées de trous de fixation comprennent 20 trous alternativement ronds et présentant la forme de fentes dans la direction longitudinale des montants de châssis (11, 12.1, 12.2) ou des rails de montage (17).

8. Disposition d'armoire de commande selon l'une des revendications précédentes
**caractérisée en ce que**
les montants de châssis (11, 12.1, 12.2) présentent, dans le sens de la largeur et/ou dans le sens de la profondeur, des plans de montage décalés les uns par rapports aux autres et
**en ce que** des éléments de raccordement (18) sont prévus pour la fixation dans les deux plans de montage.

9. Disposition d'armoire de commande selon l'une des revendications précédentes
**caractérisée en ce que**
les rails de montage verticaux (17) sont fixés de manière décalée aux montants de châssis (11, 12.1, 12.2) et/ou aux rails de montage horizontaux (17) dans le sens de la profondeur à l'intérieur de la disposition de l'armoire de commande et
**en ce que**, dans le sens de la profondeur, avant les rails de montage verticaux (17) sont formés des espaces fonctionnels, superposés et séparés les uns des autres par des fonds diviseurs horizontaux (30), qui sont fermés, à l'arrière, par des plaques de montage (40), disposées sur les rails de montage verticaux (17), à l'intérieur desquelles des rails de répartition (55), s'étendant à travers plusieurs espaces fonctionnels, sont montés verticalement pour l'alimentation électrique des composants d'appareils logés dans les espaces fonctionnels.
